# EUROPEAN PATENT APPLICATION

(11) **EP 4 748 626 A1**
(43) Date of publication of application: **27.05.2026**
(21) Application number: 25198001.7
(22) Date of filing: 26.08.2025
(51) Int. Cl.: B60L 50/64, B60L 50/60, H01M 50/242, H01M 50/249

(54) **BATTERY MOUNTING STRUCTURE FOR VEHICLE, VEHICLE, AND BATTERY MOUNTING METHOD FOR VEHICLE**

(30) Priority: 24.09.2024 JP 2024165639
(71) Applicant: MAZDA MOTOR CORPORATION, Hiroshima 730-8670 (JP)
(72) Inventor: NAKAGAWA, Kohya, Aki-gun, Hiroshima, 730-8670 (JP); KAWAMURA, Chikara, Aki-gun, Hiroshima, 730-8670 (JP)
(74) Representative: Müller-Boré & Partner Patentanwälte PartG mbB

(57) **Abstract**

A battery module includes a plurality of cells and a fixing portion that fixes each of the plural cells. With support rigidity k of the fixing portion and mass m of the cell, k/m of two or more sets of the cell and the fixing portion is reference k/m. When a value of tan δ as a loss factor of the fixing portion is x, a minimum value kₘᵢₙ of k is kₘᵢₙ = 5.184 x 10⁹(1/x)²(1/m)³, a maximum value kₘₐₓ of k is kₘₐₓ = 482.2531x²m⁵, and kₘᵢₙ < kₘₐₓ, k of the reference k/m falls within a range of kₘᵢₙ ≤ k ≤ kₘₐₓ. By using the maximum k/m that is greater than the reference k/m and the minimum k/m that is less than the reference k/m, the dispersion D of (the reference k/m)/(the reference k/m), (the maximum k/m)/(the reference k/m), and (the minimum k/m)/(the reference k/m) satisfies 0.2 < D < 550.

## Description

### [Technical Field]

The present invention relates to a battery mounting structure for a vehicle or an electric vehicle. The present invention also relates to a vehicle and a battery mounting method for a vehicle.

### [Background Art]

Conventionally, in an electric vehicle in which a battery module having a plurality of cells accommodated in a battery casing is mounted on a vehicle body, the plurality of cells in the battery casing individually vibrates in an up-down direction by vibration input to the vehicle body from a suspension or the like that supports a wheel during travel of a vehicle, and the vibration is transmitted to the cabin. This results in noise, vibration, or harshness (roughness, non-comfort) that affects ride comfort in the cabin. Therefore, in the electric vehicle, improvement in NVH performance, which is performance for reducing these noise, vibration, and harshness, is a problem.

Therefore, in order to improve the NVH performance, in the structure described in Patent Literature 1, the battery casing includes a pair of side plates having a **C-**shaped cross section so as not to vibrate the plurality of cells in the battery module in the up-down direction. Each of the paired side plates has an upper flange portion and a lower flange portion that support the cells from both upper and lower sides. The pair of side plates having the **C-**shaped cross section collectively restrains left and right sides of the plurality of cells. In this way, the upper and lower flange portions suppress the vibration of each of the cells in the up-down direction, and the NVH performance is thereby improved.

### [Citation List]

### [Patent Literature]

[Patent Literature 1] JP2023-46644A

### [Summary]

### [Technical Problem]

However, in the above structure, the pair of side plates having the C-shaped cross section collectively restrains the left and right sides of the plurality of cells, and the upper and lower flange portions thereby suppress the vibration of each of the cells in the up-down direction. However, an influence on the vibration caused by resonance of each of the cells during the travel of the vehicle is not taken into consideration, and there is room for improvement in NVH performance.

The invention has been made in view of the above-described circumstance, and therefore has an object of providing a battery mounting structure for an electric vehicle capable of improving NVH performance.

### [Solution to Problem]

The above problem is solved by the invention as defined in independent claims. Particularly, a battery mounting structure for a vehicle or an electric vehicle includes: a vehicle body; and at least one battery module fixed to the vehicle body. The battery mounting structure may further include a pair of left and right front wheels attached to both left and right sides of a front portion of the vehicle body in a rotatable manner or a freely rotatable manner. The battery module includes: a battery casing; four or more of a plurality of cells accommodated in the battery casing and disposed in series in a predetermined direction, which may be a vehicle front-rear direction; and four or more of a plurality of fixing portions disposed in the battery casing and individually fixing the plurality of cells to the battery casing. When rigidity or support rigidity of the fixing portion is k [N/m] and mass of the cell is m [kg], of all sets of the cell and the fixing portion, k/m of at least two sets of the cell and the fixing portion is reference k/m, k and m of the reference k/m are set such that k is set within a range of kₘᵢₙ ≤ k ≤ kₘₐₓ when a value of tan δ as a loss factor of the fixing portion is x, a minimum value kₘᵢₙ of k is kₘᵢₙ = 5.184 x 10⁹(1/x)²(1/m)³, a maximum value kₘₐₓ of k is kₘₐₓ = 482.2531 x²m⁵, and kmin < kmax, when, of k/m of all the sets of the cell and the fixing portion, k/m that is greater than the reference k/m and is the greatest k/m is maximum k/m, of k/m of all the sets of the cell and the fixing portion, k/m that is less than the reference k/m and is the least k/m is minimum k/m, and dispersion of (the reference k/m)/(the reference k/m), (the maximum k/m)/(the reference k/m), and (the minimum k/m)/(the reference k/m) is set as D, the dispersion D is set to satisfy 0.2 < D < 550.

In such a configuration, it is possible to improve NVH performance by effectively damping the vibration of the vehicle body in the wide frequency band, e.g., 100 to 400 [Hz], by using all of the plural cells and the plural fixing portions for fixing them to the battery casing in the battery module. More specifically, the vibration is damped as follows.

According to such a configuration, a vibration wave input to the vehicle body from the pair of left and right front wheels during travel of the electric vehicle is transmitted to the battery module fixed to the vehicle body. At the time, in the battery module, an elastic wave is sequentially transmitted to four or more of the plural cells aligned in the predetermined direction via the fixing portions.

Of all the sets of the cell and the fixing portion, k/m of at least two sets of the cell and the fixing portion is the reference k/m. When, as the range with the high vibration damping effect, the value of tan δ as the loss factor of the fixing portion is x, the minimum value kₘᵢₙ of k is kₘᵢₙ = 5.184 x 10⁹(1/x)²(1/m)³, the maximum value kₘₐₓ of k is kₘₐₓ = 482.2531x²m⁵, and kₘᵢₙ < kₘₐₓ, k and m of the reference k/m are set such that k falls within a range of kₘᵢₙ ≤ k ≤ kₘₐₓ. Those at least two sets of the battery cell and the fixing portion may be configured to reduce a vibration in a range of 100 to 400 [Hz] (or about 100 to about 400 [Hz]), particularly a vibration at 126 [Hz] or about 126 [Hz].

In addition, when k/m, which is greater than the reference k/m and is the greatest k/m of k/m of all the sets of the cell and the fixing portion, is the maximum k/m, k/m, which is less than the reference k/m and is the least k/m of k/m of all the sets of the cell and the fixing portion, is the minimum k/m, and the dispersion of (the reference k/m)/(the reference k/m), (the maximum k/m)/(the reference k/m), and (the minimum k/m)/(the reference k/m) is set as D, the dispersion D is set to satisfy 0.2 < D < 550.

One or more sets of the battery cell and the fixing portion other than the above at least two sets of the battery cell and the fixing portion may be configured to reduce a vibration above or below 126 [Hz] e.g., in the range of 100 to 400 [Hz] (or about 100 to about 400 [Hz]).

In this way, in a frequency band of the vibration input to the vehicle body during the travel of the vehicle, dissipation and interference of vibration energy occur with respect to the vibration sequentially transmitted for each of the cells in series in the predetermined direction. That is, a vibration damping effect is achieved by so-called meta-damping for continuously damping the vibration along a transmission direction of the vibration by using the mass of the four or more cells arranged in series and the loss factor or a damping characteristic of the fixing portion.

Just as described, the NVH performance of the vehicle can be improved by effectively blocking the vibration input from the front wheels to the vehicle body by using the plurality of cells and the fixing portions and thereby suppressing the transmission into a cabin. Thus, it is possible to suppress the vibration at the frequency in a road noise band that is input to the vehicle body during the travel.

In addition, in the above configuration, k and m of the reference k/m are set such that k/m of at least two sets of the cell and the fixing portion as the reference k/m falls within the range with the high vibration damping effect. Meanwhile, there are two sets having k/m significantly deviating from this reference k/m, that is, the set of the cell and the fixing portion having k/m as the maximum k/m greater than the reference k/m, and the set of the cell and the fixing portion having k/m as the minimum k/m less than the reference k/m.

In such a configuration where k/m is dispersed, as described above, the dispersion D is set to satisfy 0.2 < D < 550 when the dispersion of (the reference k/m)/(the reference k/m), (the maximum k/m)/(the reference k/m), and (the minimum k/m)/(the reference k/m) is set as D. As a result, the resonance frequency is dispersed while the vibration damping effect is achieved between the plural sets of the cell and the fixing portion. In this way, it is possible to enlarge the frequency band (the band gap) in which vibration damping is generated to block the vibration transmission. As a result, it is possible to improve the NVH performance by effectively damping the vibration of the vehicle body in the wide frequency band.

Particularly, in the case where the value of tan δ is x=2, where the minimum value kₘᵢₙ of k is kₘᵢₙ = 1.296 x 10⁹(1/m)³, where the maximum value kₘₐₓ of k is kₘₐₓ = 1.929 x 103m⁵, and where kₘᵢₙ < kₘₐₓ, k is set within a range of kₘᵢₙ ≤ k ≤ kₘₐₓ.

According to such a configuration, when the value of tan δ as the loss factor of the fixing portion is x = 2, the range of the support rigidity k of the fixing portion, that is, the range between kₘᵢₙ and kₘₐₓ can be made the widest, and it is thus possible to suppress the vibration in the road noise band by selecting the support rigidity k from the wide range. As a result, a degree of freedom in design of the battery mounting structure is improved.

Further particularly, of the total number of the sets of the cell and the fixing portion, k/m of half sets of the cell and fixing portion is the reference k/m.

According to such a configuration, since k/m of the half of the total number of the sets of the cell and the fixing portion is set as the reference k/m within the above range with the high vibration damping effect, it is possible to reliably improve the vibration damping effect and to further improve the NVH performance.

Further particularly, the battery module further includes a partition portion disposed between the adjacent cells and supported by the battery casing, and in a state of being sandwiched between the cell and the partition portion, the fixing portion fixes the cell.

In such a configuration, in the state of being sandwiched between the cell and the partition portion, the fixing portion can stably fix the cell. As a result, the individual cells can reliably be resonated with the elastic wave, and the stable vibration suppressing effect can be achieved.

### [Advantageous Effects]

As described above, according to the battery mounting structure for the electric vehicle of the invention, the NVH performance can be improved.

### [Brief Description of Drawings]

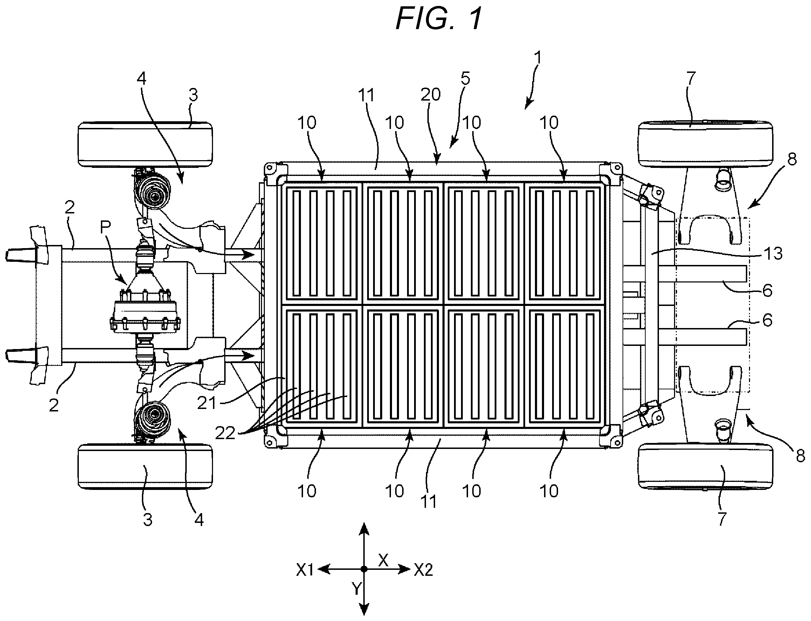

[FIG. 1] FIG. 1 is a plan view illustrating an overall configuration of a vehicle lower portion of an electric vehicle, to which a battery mounting structure for an electric vehicle according to an embodiment of the invention is applied.

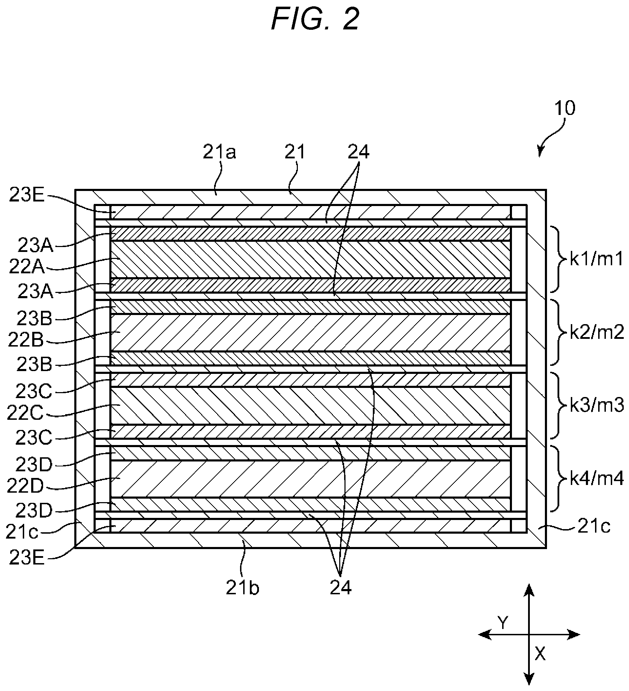

[FIG. 2] FIG. 2 is a cross-sectional view illustrating an internal configuration of a battery module in FIG. 1, and is a cross-sectional view schematically illustrating a vibration model in which k/m as a ratio between support rigidity k of the fixing portion and mass m of the battery module differs such as being from k1/m1 to k4/m4.

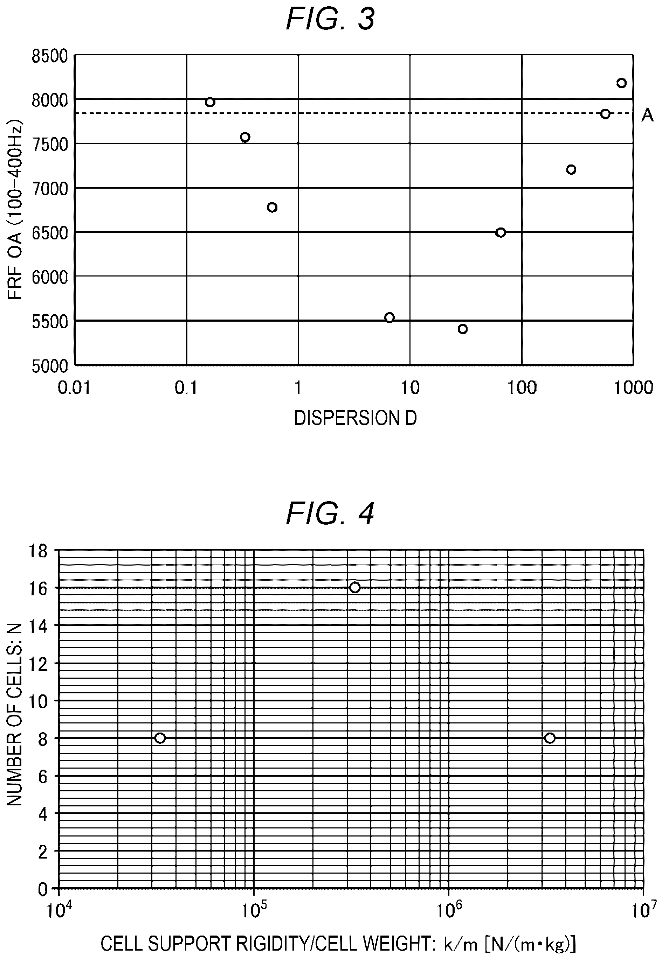

[FIG. 3] FIG. 3 is a graph illustrating a relationship between dispersion D and a transfer function (FRF OA) when dispersion of (reference k/m)/(reference k/m) and (maximum k/m)/(reference k/m) and (minimum k/m)/(reference k/m) is D for k/m as a ratio between the support rigidity k of the fixing portion and the mass m of a cell in the battery mounting structure.
[FIG. 4] FIG. 4 is a graph illustrating a relationship between k/m, which is the ratio between the support rigidity k of the fixing portion and the mass m of the cell in the battery mounting structure in the present embodiment, and the number of cells N, which is the number of the cells corresponding to the respective k/m.

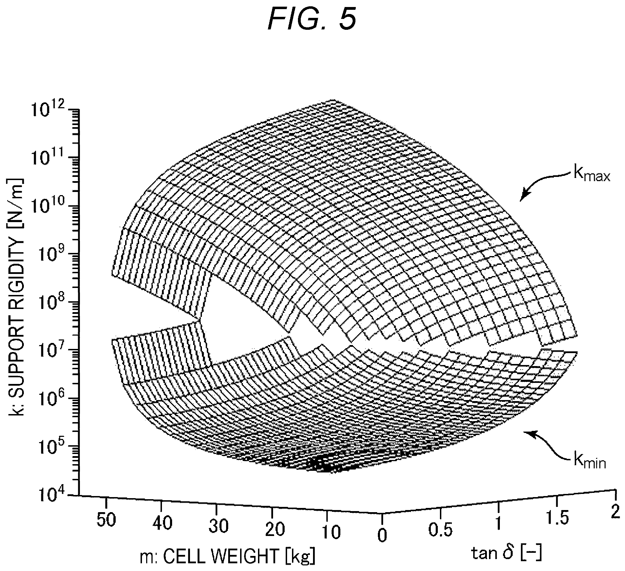

[FIG. 5] FIG. 5 is a three-dimensional graph illustrating a range having a maximum value kₘₐₓ and a minimum value kₘᵢₙ of support rigidity k with mass m of a cell of the battery module in FIG. 2, the support rigidity k of a support portion, and a loss factor tan δ of the support portion.

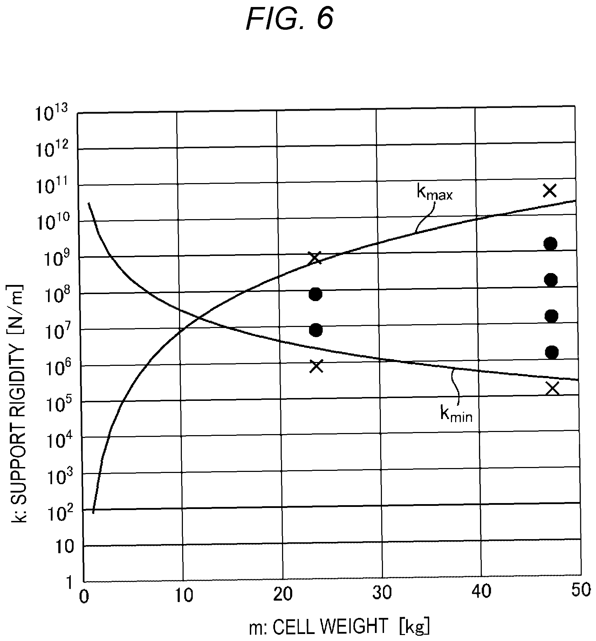

[FIG. 6] FIG. 6 is a graph of the cell mass m and the support rigidity k of the support portion illustrating the range of the maximum value kₘₐₓ and the minimum value kₘᵢₙ when the loss factor tan δ = 0.4 of the support portion in the graph of FIG. 5, and is a graph illustrating the distribution of the combination (·) of the support rigidity and the cell mass included in the invention and the combination (x) in the comparative example.

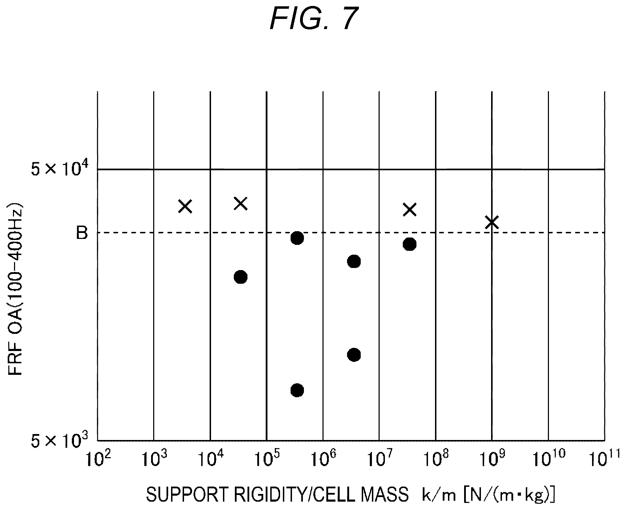

[FIG. 7] FIG. 7 is a graph illustrating a relationship between the support rigidity/cell mass and the transfer function (FRF OA) illustrating the reduction in the transfer function due to the vibration damping effect in the combination (·) of the support rigidity and the cell mass included in the invention in FIG. 6.

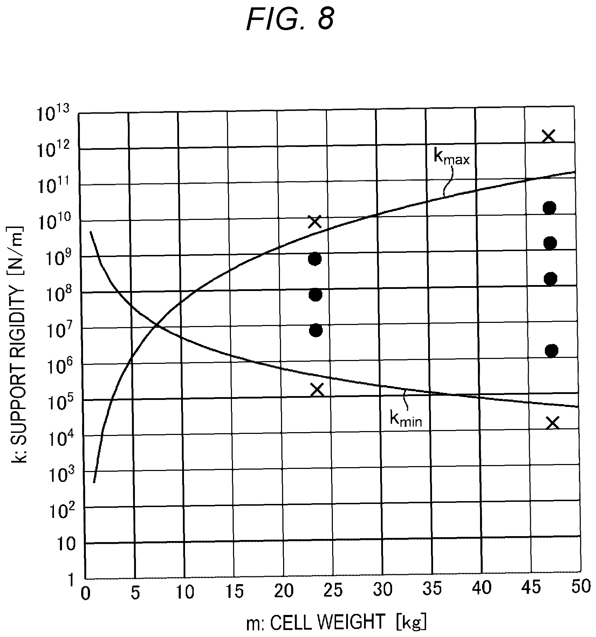

[FIG. 8] FIG. 8 is a graph of the cell mass m and the support rigidity k of the support portion illustrating the range of the maximum value kₘₐₓ and the minimum value kₘᵢₙ when the loss factor tan δ = 1.0 of the support portion in the graph of FIG. 5, and is a graph illustrating the distribution of the combination (·) of the support rigidity and the cell mass included in the invention and the combination (x) in the comparative example.

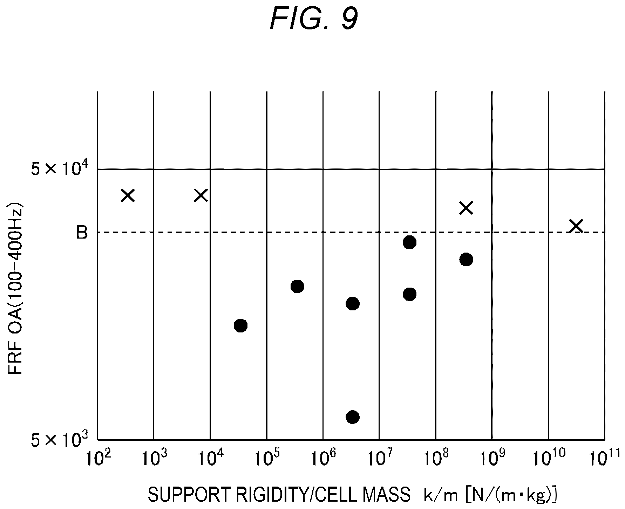

[FIG. 9] FIG. 9 is a graph illustrating a relationship between the support rigidity/cell mass and the transfer function (FRF OA) illustrating the reduction in the transfer function due to the vibration damping effect in the combination (·) of the support rigidity and the cell mass included in the invention in FIG. 8.

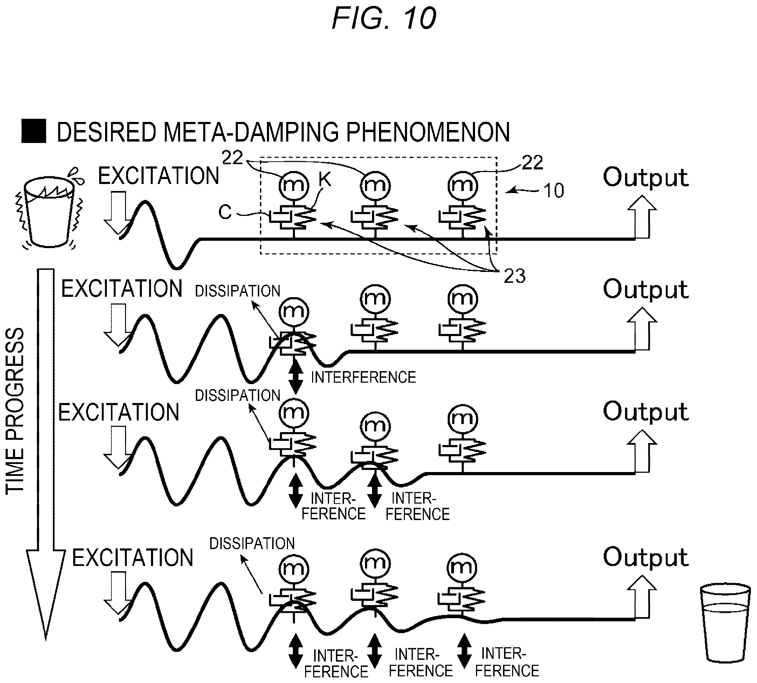

[FIG. 10] FIG. 10 is a chart schematically illustrating a meta-damping phenomenon, occurrence of which is desired in the battery mounting structure in the invention.

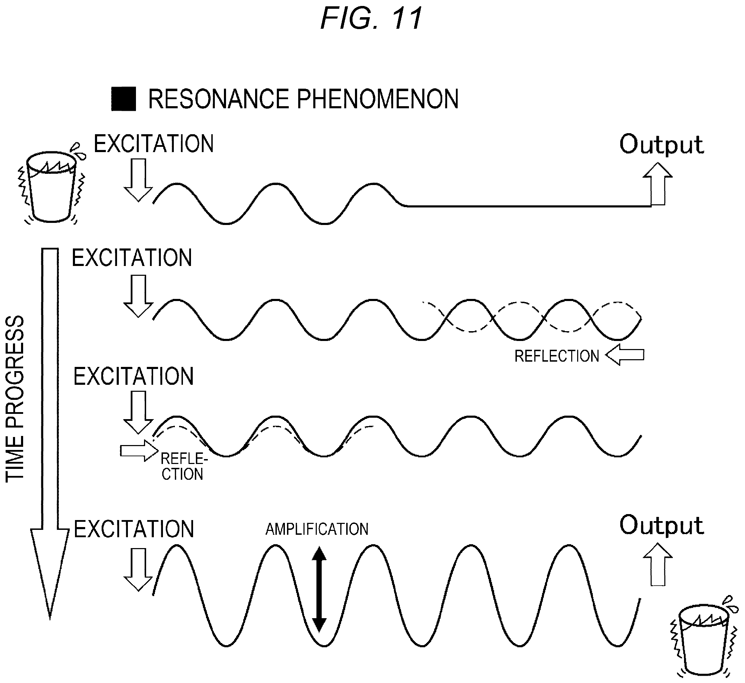

[FIG. 11] FIG. 11 is a chart schematically illustrating a resonance phenomenon as a comparative example with meta-damping.

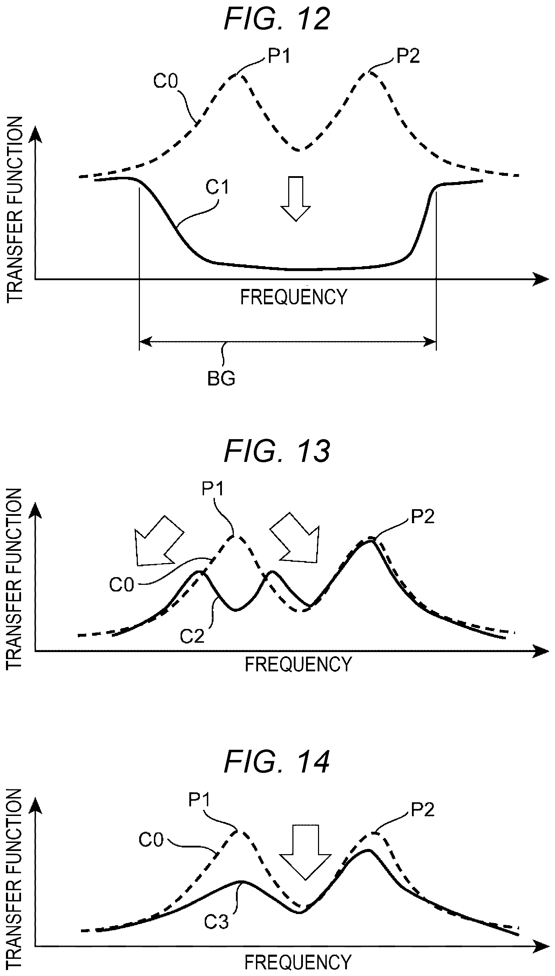

[FIG. 12] FIG. 12 is a graph illustrating a relationship between a frequency and the transfer function for illustrating interruption of an elastic wave in a wide frequency range by meta-damping that occurs in the invention.
[FIG. 13] FIG. 13 is a graph illustrating a relationship between the frequency and the transfer function for illustrating dispersion of a resonance peak at a specific frequency by a dynamic vibration absorber as a comparative example with meta-damping.
[FIG. 14] FIG. 14 is a graph illustrating a relationship between the frequency and the transfer function for illustrating a reduction in the resonance peak at the specific frequency only by damping as the comparative example with meta-damping.

### [Description of Embodiments]

Hereinafter, a battery mounting structure for a vehicle or an electric vehicle according to an embodiment of the invention will be described in detail with reference to the drawings.

As illustrated in FIG. **1****,** a vehicle lower portion of the vehicle including a battery mounting structure as an embodiment of the invention may have a structure in which a casing 20 of a battery pack 5 is integrated with a vehicle body **1.** Such a structure is a structure in which a battery module 10 is directly mounted on the vehicle body **1,** and is referred to as a so-called skateboard structure. The vehicle may be an electric vehicle.

For example, as illustrated in FIG. 1, the vehicle, particularly the vehicle lower portion includes: the vehicle body 1 integrated with the casing 20; one or a plurality of the battery modules 10 (eight in FIG. 1) mounted on the casing 20 of the vehicle body 1; and a pair of left and right front wheels **3.** The vehicle, particularly the vehicle lower portion may further include: a pair of left and right rear wheels 7; and a drive unit P that includes an electric motor for driving the pair of front wheels **3.**

The battery pack 5 includes the plurality of battery modules 10 and the casing 20 that accommodates the battery modules 10. The plurality of battery modules 10 is individually fixed to the inside of the casing 20. At least one battery module 10 may be provided.

As illustrated in FIG. 1, the vehicle body 1 may include: a pair of front lower arms 2; a pair of front suspensions 4 respectively fixed to the pair of front lower arms 2 and respectively supporting the pair of front wheels 3 in a rotatable manner or a freely rotatable manner; the casing 20 of the battery pack 5 located on a vehicle rear side X2 of the pair of front lower arms 2; a pair of rear lower arms 6 located on the vehicle rear side X2 of the casing 20; a pair of rear suspensions 8 respectively fixed to the pair of rear lower arms 6 and respectively supporting the pair of rear wheels 7 in a rotatable manner or a freely rotatable manner; and a floor plate (not illustrated) covering an upper portion of the battery pack 5 and constituting a floor portion of a cabin.

The casing 20 of the battery pack 5 may include: a pair of left and right side members 11 separated from each other in a vehicle width direction Y and extending in a vehicle front-rear direction X; a front cross member 12 extending in the vehicle width direction Y and coupling front end portions of the pair of side members 11; and a rear cross member 13 extending in the vehicle width direction Y and coupling rear end portions of the pair of left and right side members 11.

Rear end portions of the pair of front lower arms 2 may be coupled to the front cross member 12. Front end portions of the pair of rear lower arms 6 may be coupled to the rear cross member 13.

In the present embodiment, as illustrated in FIG. 1, groups in two rows comprised of eight battery modules 10 are arranged to be separated from each other in the vehicle width direction Y. The four battery modules 10 in each of the rows may be disposed at equally-spaced intervals in the vehicle front-rear direction X.

As illustrated in FIG. 2, each of the battery modules 10 includes: a battery casing 21; four or more cells 22A to 22D as a plurality of cells 22 arranged side by side in the vehicle front-rear direction X (predetermined direction) accommodated in the battery casing 21; four or more fixing portions 23A to 23D as a plurality of fixing portions 23 respectively fixing the plurality of cells 22; and, optionally, a plurality of partition portions 24 each partitioning respective two of the adjacent cells 22A to 22D. Here, the plurality of cells 22A to 22D only needs to be aligned in a predetermined direction, and is not limited to the vehicle front-rear direction. The predetermined direction may be the vehicle width direction Y.

The battery casing 21 may be a rectangular parallelepiped hollow casing, and for example, has: a front wall 21a extending in the vehicle width direction Y; a rear wall 21b extending in the vehicle width direction Y so as to be parallel to the front wall 21a on the vehicle rear side of the front wall 21a; a pair of left and right side walls 21c coupling both left and right end portions of the front wall 21a and the rear wall 21b and extending in the vehicle front-rear direction X; and a top wall and a bottom wall (not illustrated) spaced apart in an up-down direction Z.

Each of the cells 22A to 22D may be a secondary battery such as a lithium-ion battery, and may have a plate shape, a bag shape or a thin-bag (pouch) shape, but may also have a cylindrical shape. The plurality of plate-shaped cells 22A to 22D may be arranged in the vehicle front-rear direction X so as to be parallel to each other, that is, to extend in the vehicle width direction Y.

The partition portion 24 may be a plate-shaped portion extending in the vehicle width direction Y and disposed between the two adjacent cells 22A to 22D, and left and right end portions may be fixed to the side walls 21c of the battery casing 21, respectively.

The fixing portions 23A to 23D are disposed in the battery casing 21 and individually fix the cells 22A to 22D, respectively. For example, the fixing portions 23A to 23D illustrated in FIG. 2 individually fix the cells 22 to the battery casing 21 in a state of being sandwiched between respective one of the cells 22A to 22D and the partition portion 24 (in the present embodiment, as will be described below, fixed to the battery casing 21 via the partition portion 24).

As the fixing portions 23A to 23D, a damping adhesive made of a polymer material or the like may be used, such as a sealer or a rubber-based adhesive, and a polymer adhesive having a vibration damping characteristic due to the Young's modulus e.g., at a temperature of 20°C of 500 Mpa or less and a loss factor of 0.1 or greater, or the like may be used. Particularly, in the present embodiment, the fixing portions 23A to 23D made of the polymer adhesive or the like are respectively disposed on both front and rear surfaces of the cells 22A to 22D, and adhere the cells 22A to 22D to the partition portion 24. In this way, the fixing portions 23A to 23D respectively fix the cells 22A to 22D to the battery casing 21 via the partition portion 24. Furthermore, as illustrated in FIG. 2, an additional fixing portion 23E may be disposed on both sides in the vehicle front-rear direction X of each of the foremost and rearmost partition portions 24.

In the present embodiment, for example, the fixing portion 23 supports the cell 22 in the state of being sandwiched between the cell 22 and the partition portion 24. In this way, the fixing portion 23 can stably fix the cell 22. Thus, the individual cells 22 can reliably be resonated with an elastic wave, and a stable vibration suppressing effect can thereby be exhibited.

### (Description on Setting of Support Rigidity k)

In the battery mounting structure in the present embodiment, as illustrated in FIGs. 1 to 2, in a configuration where the battery module 10 has the plurality of cells 22 and the plurality of fixing portions 23 for individually fixing the plurality of cells 22, the rigidity or the support rigidity k of each of the fixing portions 23 is set as follows to enhance the vibration damping effect. The support rigidity may be a tensional rigidity and/or a shear rigidity.

First, when the support rigidity of the fixing portion 23 is k [N/m], mass of each of the cells 22 is m [kg], a value of tan δ as the loss factor of the fixing portion 23 is x, and a minimum value kₘᵢₙ of k is kₘᵢₙ = 5.184 x 10⁹(1/x)²(1/m)³, and a maximum value kₘₐₓ of k is kₘₐₓ = 482.2531x²m⁵, and kₘᵢₙ < kₘₐₓ, k is set in a range of kₘᵢₙ ≤ k ≤ kₘₐₓ.

Conditions of the loss factor tan δ and the support rigidity k in the present embodiment are the loss factor and the support rigidity at 10 to 60°C and 100 Hz.

FIG. 5 is a three-dimensional graph illustrating a range having a maximum value kₘₐₓ and a minimum value kₘᵢₙ of support rigidity k with the mass m of the cell 22 of the battery module 10 in FIG. 2, the support rigidity k of the fixing portion 23, and the loss factor tan δ of the fixing portion 23.

In the graph of FIG. 5, for example, the minimum value kₘᵢₙ and the maximum value kₘₐₓ described above fall in a range indicated by a substantially conical curved surface. When the cell mass m, the support rigidity k, and the loss factor tan δ are set to be positioned between the minimum value kₘᵢₙ and the maximum value kₘₐₓ described above, the plurality of cells 22 can resonate with respect to road noise (a vibration wave of about 100 Hz (100 Hz to 400 Hz)), which is vibration input to the vehicle body during travel of the vehicle, and can continuously damp the vibration.

For example, as FIG. 6 shows a graph of the support rigidity (or stiffness) k of the cell mass m and the fixed portion showing the range of the maximum value k ₘₐₓ and the minimum value k ₘᵢₙ when the loss factor tan δ=0.4 of the fixed portion in the graph of FIG. 5, it can be seen that the combination (·) of the support rigidity k and the cell mass m included in the present disclosure is distributed in the range surrounded by the curve of the minimum value k ₘᵢₙ and the curve of the maximum value k ₘₐₓ in FIG. 6, and the combination (x) of the comparative example is distributed outside the range.

In FIGS. 6 to 9, the combination (·) of the support rigidity k and the cell mass m is shown as a "dot". The combination (x) of the support rigidity k and the cell mass m is shown as a "cross".

Furthermore, when a graph illustrating a relationship between the support rigidity/cell mass and a transfer function (FRF (Frequency Response Function) OA) at the road noise of 100 to 400 Hz in FIG. 7 is seen, it is understood that, in the combination (·) of the support rigidity k and the cell mass m included in the invention in FIG. 6, the transfer function is reduced to a lower level than a level of a transfer function B (e.g., 29380 mm/s²/N), with which an occupant of the vehicle can sense vibration damping, due to the vibration damping effect. Meanwhile, it is understood that, with the combination (x) in the comparative example, it is higher than the level of the transfer function B, and thus the vibration damping effect cannot be achieved. The transfer function may be a transfer function from the left front wheel 3 to the right rear wheel 7 or a transfer function from the right front wheel 3 to the left rear wheel 7.

Here, it has been confirmed by the inventors from the computer analysis that, in the case of the loss factor tan δ = 0.4 or greater and the cell mass m is 23 kg or greater, in a range where the support rigidity/cell mass [N/(m · kg)] is 3.0 × 10⁵ to 1.0 × 10⁷, the combination (·) of the support rigidity k and the cell mass m falls in the range surrounded by the curve of the minimum value kₘᵢₙ and the curve of the maximum value kₘₐₓ in FIG. 6, and thus the vibration damping effect is achieved. In addition, it has been confirmed by the inventors from the computer analysis that, in the case of the loss factor tan δ = 0.4 or greater and the cell mass m is 47 kg or greater, in a range where the support rigidity/cell mass [N/(m · kg)] is 1.0 × 10⁴ to 8.0 × 10⁷, the combination (·) of the support rigidity k and the cell mass m falls in the range surrounded by the curve of the minimum value kₘᵢₙ and the curve of the maximum value kₘₐₓ in FIG. 6, and thus the vibration damping effect is achieved.

Similarly, when a graph in FIG. 8 (a graph of the cell mass m and the support rigidity k of the support portion illustrating a range of the maximum value kₘₐₓ and the minimum value kₘᵢₙ when the loss factor tan δ = 1.0 of the fixing portion in the graph in FIG. 5) and the graph in FIG. 9 (the graph illustrating the relationship between the support rigidity/cell mass and the transfer function (FRF OA)) are seen, it is also understood that, with the combination (·) of the support rigidity k and the cell mass m included in the invention of FIG. 8, the transfer function is reduced to the lower level than the level of the transfer function B, with which the occupant of the vehicle can sense the vibration damping, due to the vibration damping effect.

Here, it has been confirmed by the inventors from the computer analysis that, in the case of the loss factor tan δ = 1.0 or greater and the cell mass m is 12 kg or greater, in a range where the support rigidity/cell mass [N/(m · kg) ] is 2.5 × 10⁵ to 1.0 × 10⁷, the combination (·) of the support rigidity k and the cell mass m falls in the range surrounded by the curve of the minimum value kₘᵢₙ and the curve of the maximum value kₘₐₓ in FIG. 8, and thus the vibration damping effect is achieved.

Furthermore, in regard to a case where the loss factor is low, it has been confirmed by the inventors from the computer analysis that, for example, in the case of the loss factor tan δ = 0.1 or greater and the cell mass m is 47 kg or greater, in a range where the support rigidity/cell mass: k/m [N/(m · kg)] is 4.0 × 10⁴ to 7.0 × 10⁶, the combination of the support rigidity k, the cell mass m, and the value x of the loss factor tan δ falls in the range surrounded by the curve of the minimum value kₘᵢₙ and the curve of the maximum value kₘₐₓ in FIG. 5, and thus the vibration damping effect is achieved.

From the above results, it is understood that the vehicle battery mounting structure in the present embodiment has the following operational effects.

During travel of the electric vehicle, the vibration wave input to the vehicle body 1 from the pair of left and right front wheels 3 is transmitted to each of the plural battery modules 10 fixed to the vehicle body 1. At the time, in each of the battery modules 10, the elastic wave is sequentially transmitted to the plurality of cells 22 aligned in the vehicle front-rear direction X via the fixing portions 23. In the above battery mounting structure, since the support rigidity k of the fixing portion satisfies the range of kₘᵢₙ ≤ k ≤ kₘₐₓ in the above condition, the plurality of cells 22 respectively resonates to interfere with the elastic wave and thereby reduce the elastic wave.

In other words, in a frequency band of the vibration input to the vehicle body 1 during the travel of the vehicle, dissipation and interference of vibration energy occur to the vibration that is sequentially transmitted for each of the cells 22 in series in the vehicle front-rear direction X. That is, it is possible to exert the vibration damping effect by so-called meta-damping (meta-resonance) for continuously damping the vibration along a transmission direction of the vibration by using the mass of the two or more cells 22 arranged in series and the loss factor or the damping characteristic of the fixing portion 23.

Just as described, NVH performance of the vehicle can be improved by effectively blocking the vibration input from the front wheels 3 to the vehicle body 1 by using the plurality of cells 22 and the fixing portions 23 and thereby suppressing the transmission into a cabin. Thus, it is possible to suppress the vibration at the frequency in a road noise band that is input to the vehicle body 1 during the travel. The road noise band may be 100 to 400 Hz or about 100 to about 400 Hz.

Here, in the case where the value of the loss factor tan δ of the fixing portion 23 is x = 2, and where the minimum value kₘᵢₙ of the support rigidity k is kₘᵢₙ = 1.296 x 10⁹ (1/m)³, the maximum value kₘₐₓ of k is kₘₐₓ = 1.929 x 10³m⁵, and kₘᵢₙ < kₘₐₓ, it is preferable that k is set to a range of kₘᵢₙ ≤ k ≤ kₘₐₓ.

In this configuration, when the value of the loss factor tan δ of the fixing portion 23 is x = 2, the range of the support rigidity k of the fixing portion 23, that is, the range between kₘᵢₙ and kₘₐₓ can be made the widest, and it is thus possible to suppress the vibration in the road noise band by selecting the support rigidity k from the wide range. As a result, a degree of freedom in design of the battery mounting structure is improved.

### (Description of Meta-Damping)

In order to effectively damp the vibration input from the front wheels 3 to the vehicle body 1 by a vibration model of a multi-mass point dispersion type including the plurality of cells 22 in the battery module 10 illustrated in FIGs. 1 to 2, the present inventors have intensely devised the support rigidity k of the fixing portion 23 and considered a configuration to generate the meta-damping (meta-resonance) in each of the battery modules 10.

Here, as illustrated in FIG. 10, the meta-damping means to generate a plurality of resonances under a condition of the same excitation frequency in the vibration model of the multi-mass point dispersion type and to block the vibration transmitted to the output destination (that is, to generate a band gap).

For example, as illustrated in FIG. 11, in the normal resonance phenomenon, when the vibration is continuously applied at the same frequency, an input wave resonates with a reflective wave from the output destination, and thus the vibration reaching the output destination is amplified.

However, in the meta-damping illustrated in FIG. 10, even when the plurality of cells 22 (having the mass M) and the plurality of fixing portions 23 (having a spring constant K and a damping rate C) that individually fix them in each of the battery modules 10 vibrate continuously at the same frequency, the input wave interferes for each set of the cells 22 and the fixing portions 23, and the vibration energy is dissipated (that is, vibration damping), whereby the vibration reaching the output destination is blocked. That is, in the meta-damping, damping is caused by continuous interference so as not to cause amplification due to the resonance. When seen in the entire vehicle body 1 in FIG. **1****,** the vibration input from the front wheels 3 during the travel of the vehicle is transmitted to the eight battery modules 10 through the front suspension 4, the front lower arm 2, the front cross member 12, and the bottom wall. At this time, the plurality of cells 22 and the fixing portions 23 (23A to 23D) (see FIG. 2) fixing them in each of the battery modules 10 interfere with the vibration and dissipate the vibration energy, and the vibration is thereby gradually reduced in the vehicle rear direction X2.

The support rigidity k of the fixing portion 23 is set as described above in order to cause damping by the meta-damping described above in each of the battery modules 10.

The meta-damping realized by the battery mounting structure in the present embodiment as described above controls the vibration level by a resonance structure of a metamaterial (more specifically, a structure of the battery module 10 formed by the plurality of cells 22 and the plurality of fixing portions 23) in which a local resonance element and a damping element are combined. Accordingly, in a target frequency band (band gap), the vibration is not transmitted to the cabin (the vehicle interior) due to interaction by the resonance structure.

### (Description of Battery Module 10 in which k/m in Present Embodiment is Dispersed)

As illustrated in FIG. 2, in the battery module 10 of the present embodiment, when the mass of each of the plural cells 22A to 22D is represented by m1 to m4 and the support rigidity of the fixing portions 23A to 23D for fixing these cells 22A to 22D is represented by k1 to k4, k/m as the support rigidity/mass can be represented by k1/m1 to k4/m4.

In the following description, the individual cells may hereinafter simply be referred to as the "plurality of cells 22" or the "cells 22" when not being distinguished among the plurality of cells, and the individual fixing portions may hereinafter simply be referred to as the "plurality of fixing portions 23" or the "fixing portions 23" when not being distinguished among the plurality of fixing portions.

In the present embodiment, k/m including the support rigidity k in the above range (kₘᵢₙ ≤ k ≤ kₘₐₓ) with the high vibration damping effect is particularly set as reference k/m.

In the battery mounting structure of the present embodiment, of all the sets of the cells 22 (22A to 22D) and the fixed portions 23 (23A to 23D), k/m of at least two sets (preferably, a half of the total number of sets) of the cell 22 and the fixing portion 23 is the reference k/m.

For example, those at least two sets of the battery cell 22 and the fixing portion 23 may be configured to reduce a vibration in a range of 100 to 400 [Hz] (or about 100 to about 400 [Hz]), particularly a vibration at 126 [Hz] or about 126 [Hz].

In addition, k/m, which is greater than the reference k/m and is the greatest k/m, of k/m of all sets of the cell 22 and the fixing portion 23 is set as maximum k/m. Furthermore, k/m, which is less than the reference k/m and is the least k/m, of k/m of all sets of the cell 22 and the fixing portion 23 is set as minimum k/m.

Moreover, the dispersion of (the reference k/m)/(the reference k/m), (the maximum k/m)/(the reference k/m), and (the minimum k/m)/(the reference k/m) is set as D. This dispersion D is set to satisfy 0.2 < D < 550.

For example, the reference k/m, the maximum k/m, and the minimum k/m can be considered as follows. In regard to the plural (for example, four or more) cells 22 (22A to 22D) disposed in series in the vehicle front-rear direction X illustrated in FIG. 2, k/m, which is a ratio between the mass m of each of the cells 22 and the support rigidity k of the fixing portion 23 (23A to 23D) for fixing the cells 22, is expressed as k1/m1, k2/m2, k3/m3, k4/m4...as illustrated in FIG. 2.

These k1/m1, k2/m2, k3/m3, k4/m4...are not necessarily the same, there may be at least two thereof in the setting range of the above reference k/m having the high vibration damping effect, and at least one each of maximum k/m as a maximum value that is a greater value than reference k/m and minimum k/m as a minimum value that is a value less than reference k/m may be provided.

For example, as illustrated in the graph of FIG. 4, when a model having 32 cells 22 as the total number of cells N, in the setting range of the reference k/m described above, k/m that is a value slightly greater than 10^{5.2} N/(m · kg) and whose number of cells N is 16 as the largest is the reference k/m, k/m (the number of cells is 8) that is a value greater than the reference k/m and is the maximum value is the maximum k/m, and k/m (the number of cells is 8) that is a value less than the reference k/m and is the minimum value is the minimum k/m.

As described above, when the reference k/m, the maximum k/m, and the minimum k/m are determined, it is possible to determine the dispersion D of (the reference k/m)/(the reference k/m), (the maximum k/m)/(the reference k/m), and (the minimum k/m)/(the reference k/m).

A graph in FIG. 3 is a graph in which a horizontal axis represents the dispersion D and a vertical axis represents a transfer function (FRF OA) of the vibration (so-called road noise) in the vicinity of 100 Hz to 400 Hz, which is input from the front wheels 3 and transmitted to the vehicle body 1 during the travel of the vehicle, and illustrates a relationship between these dispersion D and transfer function (FRF OA).

As illustrated in the graph of FIG. 3, it is understood that, when this dispersion D is set to satisfy 0.2 < D < 550, the transfer function (FRF OA) of the vibration (so-called road noise) in the vicinity of 100 Hz to 400 Hz, which is input from the front wheels 3 and transmitted to the vehicle body 1 during the travel of the vehicle, clearly becomes less than the transfer function A of a model without the dispersion (that is, a model in which k/m of all the cells 22 is the same). Accordingly, when the dispersion D in relation to k/m is dispersed within the above range as in the present embodiment, the vibration damping effect can be achieved in the wide frequency band (band gap).

In other words, the minimum value "0.2" and the maximum value "550" of the dispersion D may be determined based on the dispersion D at which the FRF OA is less than the transfer function A, as shown in FIG. 3. For example, the target frequency band (band gap) of the vibration to be reduced is 126Hz and/or the transfer function A of the model without the dispersion is 7849.

Here, as long as the dispersion D falls within the above setting range (0.2 < D < 550), even when the maximum k/m and the minimum k/m fall out of the setting range of the reference k/m, it is possible to exert the vibration damping effect by meta-damping in the wide frequency band in the entire battery pack 5 including the plurality of cells 22 and fixing portions 23.

The support rigidity k of the fixing portion 23 may structurally be set to be lower than the rigidity of the battery casing 21 for accommodating the plurality of cells 22.

In the case where each of the cells 22 has a pouch shape (a flat bag shape) or a square cell shape (a flat plate shape), the number of the cells 22 mounted on the vehicle body 1 is approximately 100 to 200, for example. Meanwhile, in the case where the mass m as a resonator that is defined by above meta-damping, the number of units of the cells 22 may be approximately 12 to 50.

When each of the cells 22 has a cylindrical shape, the number of the cells 22 mounted on the vehicle body 1 is approximately 2000 to 4000, for example. Meanwhile, in the case where the mass m as the resonator that is defined by above meta-damping is one unit, the number of units of the cells 22 may be approximately 60 to 240.

Even when each of the cells 22 has any of the above shapes, the number of units as the number of resonators is significantly greater than the number of the battery modules, and thus the sufficient vibration damping effect can be achieved by the damping characteristic of the reference cell (the cell 22 having the reference k/m). Thus, even when an upper limit value of the dispersion D is increased to 550 as in the graph of FIG. 3, degradation of the reduction effect is small.

### (Description of Meta-Damping, Dynamic Vibration Absorber, and Damping)

Here, as a method for damping the vibration, differences in meta-damping, the dynamic vibration absorber, and damping will be described.

In the meta-damping, as indicated by a curve C1 of a graph in FIG. 12, an input elastic wave C0 is blocked and damped by interference caused by interaction between the input elastic wave C0 (the elastic wave having peaks P1, P2) and a meta-resonator (the vibration model of the multi-mass point dispersion type in FIG. 10 described above), and a band gap BG (that is, a frequency band in which the vibration is blocked and damped) is enlarged to form the wide BG connected as one.

In the dynamic vibration absorber, vibration of a main vibration system is damped by adding an auxiliary mass and transferring the energy to an auxiliary vibration system. More specifically, in the dynamic vibration absorber, as indicated by a curve C2 of a graph in FIG. 13, the vibration is damped by dividing the peak P1 as the large transfer function of the input elastic wave C0 into two small peaks. As a result, the wide band gap BG (see FIG. 12) such as meta-damping does not occur.

In damping, the energy generated by the vibration is dissipated into heat or fluid resistance by a damping material, and the vibration is thereby damped. More specifically, in damping, as indicated by a curve C3 of the graph in FIG. 14, the vibration is damped by lowering the peak P1 having the large transfer function of the input elastic wave C0. Therefore, the band gap BG such as meta-damping is not generated.

### (Characteristics of Present Embodiment)

(1) In the battery mounting structure of the present embodiment, it is possible to improve the NVH performance by effectively damping the vibration of the vehicle body 1 in the wide frequency band by using all of the plural cells 22 and the plural fixing portions 23 for fixing them to the battery casing 21 in the battery module 10. For example, the vibration is damped as follows.

According to such a configuration, a vibration wave input to the vehicle body 1 from the pair of left and right front wheels 3 during travel of the electric vehicle is transmitted to the battery module 10 fixed to the vehicle body 1. At the time, in the battery module 10, the elastic wave is sequentially transmitted to four or more of the plural cells 22 aligned in the vehicle front-rear direction X (the predetermined direction) via the fixing portions 23.

Of all the sets of the cell 22 and the fixing portion 23, k/m of at least two sets of the cell 22 and the fixing portion 23 is the reference k/m.

When, as the range with the vibration damping effect, the value of tan δ as the loss factor of the fixing portion 23 is x, the minimum value kₘᵢₙ of k is kₘᵢₙ = 5.184 x 10⁹(1/x)²(1/m)³, the maximum value kₘₐₓ of k is kₘₐₓ = 482.2531x²m⁵, and kₘᵢₙ < kₘₐₓ, k and m of the reference k/m are set such that k falls within a range of kₘᵢₙ ≤ k ≤ kₘₐₓ.

In addition, when k/m, which is greater than the reference k/m and is the greatest k/m of k/m of all the sets of the cell 22 and the fixing portion 23, is the maximum k/m, k/m, which is less than the reference k/m and is the least k/m of k/m of all the sets of the cell 22 and the fixing portion 23, is the minimum k/m, and the dispersion of (the reference k/m)/(the reference k/m), (the maximum k/m)/(the reference k/m), and (the minimum k/m)/(the reference k/m) is set as D, the dispersion D is set to satisfy 0.2 < D < 550.

In this way, in a frequency band of the vibration input to the vehicle body 1 during the travel of the vehicle, dissipation and interference of vibration energy occur to the vibration that is sequentially transmitted for each of the cells 22 in series in the vehicle front-rear direction X (the predetermined direction). That is, a vibration damping effect is achieved by so-called meta-damping for continuously damping the vibration along a transmission direction of the vibration by using the mass of the four or more cells 22 arranged in series and the loss factor or a damping characteristic of the fixing portion 23.

Just as described, NVH performance of the vehicle can be improved by effectively blocking the vibration input from the front wheels 3 to the vehicle body 1 by using the plurality of cells 22 and the fixing portions 23 and thereby suppressing the transmission into a cabin. Thus, it is possible to suppress the vibration at the frequency in a road noise band that is input to the vehicle body 1 during the travel.

Particularly, in the above configuration, k and m of the reference k/m are set such that k/m of at least two sets of the cell 22 and the fixing portion 23 as the reference k/m falls within the range with the high vibration damping effect. Meanwhile, there are two sets having k/m deviating or significantly deviating from this reference k/m, that is, the set of the cell 22 and the fixing portion 23 having k/m as the maximum k/m greater than the reference k/m, and the set of the cell 22 and the fixing portion 23 having k/m as the minimum k/m less than the reference k/m.

In such a configuration where k/m is dispersed, as described above, the dispersion D is set to satisfy 0.2 < D < 550 when the dispersion of (the reference k/m)/(the reference k/m), (the maximum k/m)/(the reference k/m), and (the minimum k/m)/(the reference k/m) is set as D. As a result, the resonance frequency is dispersed while the vibration damping effect is achieved between the plural sets of the cell 22 and the fixing portion 23. In this way, it is possible to enlarge the frequency band (the band gap) in which vibration damping is generated to block the vibration transmission. As a result, it is possible to improve the NVH performance by effectively damping the vibration of the vehicle body 1 in the wide frequency band.

(2)
Particularly, in the present embodiment, in the case where the value of tan δ is x = 2, and the minimum value kₘᵢₙ of k is kₘᵢₙ = 1.296 x 10⁹ (1/m)³, the maximum value kₘₐₓ of k is kₘₐₓ = 1.929 x 10³m⁵, and kₘᵢₙ < kₘₐₓ, it is preferable that k is set in a range of kₘᵢₙ ≤ k ≤ kₘₐₓ.

According to such a configuration, when the value of the loss factor tan δ of the fixing portion 23 is x = 2, the range of the support rigidity k of the fixing portion 23, that is, the range between kₘᵢₙ and kₘₐₓ can be made the widest, and it is thus possible to suppress the vibration in the road noise band by selecting the support rigidity k from the wide range. As a result, a degree of freedom in design of the battery mounting structure is improved.

(3)
Further particularly, in the battery mounting structure of the present embodiment, of all the sets of the cell 22 and the fixing portion 23, k/m of half sets of the cell 22 and the fixing portion 23 is the reference k/m.

In this configuration, since k/m of the half of the total number of the sets of the cell 22 and the fixing portion 23 is set as the reference k/m within the above range with the high vibration damping effect, it is possible to reliably improve the vibration damping effect and to further improve the NVH performance.

(4)
Further particularly, in the battery mounting structure of the present embodiment, the battery module 10 further includes the partition portion that is disposed between the adjacent cells 22 and is supported by the battery casing 21. In the state of being sandwiched between the cell 22 and the partition portion 24, the fixing portion 23 is fixed to the cell 22.

In this configuration, in the state of being sandwiched between the cell 22 and the partition portion, the fixing portion 23 can stably fix the cell 22. As a result, the individual cells 22 can reliably be resonated with the elastic wave, and the stable vibration suppressing effect can be achieved.

### (Modified Examples)

(A)
In the above embodiment, as illustrated in FIG. 2, the fixing portion 23 (23A to 23D) that is made of the polymer adhesive or the like adheres both of the front and rear surfaces of each of the cells 22 (22A to 22D) to the adjacent partition portion 24. However, the invention is not limited thereto. The fixing portion 23 may adhere either the front or the rear surface of each of the cells 22, for example, the front surface to the adjacent partition portion 24. Alternatively, the fixing portion 23 may directly fix either the front or the rear surface of the cell 22 to the top plate or the bottom plate of the battery casing 21.

(B)
As another modified example of the invention, in a configuration in which the two cells 22 that are adjacent to each other in the vehicle front-rear direction X are integrally coupled by welding, bolting, or the like, the two integrated cells 22 as one large cell may be bonded to the partition portion 24 adjacent to the front and rear surfaces thereof by the fixing portion 23. In such a configuration, the minimum value kₘᵢₙ and the maximum value kₘₐₓ of the support rigidity k may be calculated by using total mass of the two integrated cells 22 as the cell mass m.

(C)
In the above embodiment, the cell in the plate shape or the pouch shape is described as an example of the cell 22. However, as the modified example of the invention, a plurality of cylindrical cells 22 may be applied.

### [Reference Signs List]

- 1:: vehicle body
- 3:: front wheel
- 10:: battery module
- 21:: battery casing
- 22, 22A to 22D:: cell
- 23, 23A to 23D:: fixing portion
- 24:: partition portion

## Claims

1. A battery mounting structure for a vehicle comprising:
a vehicle body (1); and
at least one battery module (10) fixed to the vehicle body (1), wherein
the battery module (10) includes:
a battery casing (21);
four or more of a plurality of cells (22, 22A to 22D) accommodated in the battery casing (21) and disposed in series in a predetermined direction; and
four or more of a plurality of fixing portions (23, 23A to 23D) disposed in the battery casing (21) and individually fixing the plurality of cells (22, 22A to 22D) to the battery casing (21),
when rigidity of the fixing portion (23, 23A to 23D) is k [N/m] and mass of the cell (22, 22A to 22D) is m [kg],
of all sets of the cell (22, 22A to 22D) and the fixing portion (23, 23A to 23D), k/m of at least two sets of the cell (22, 22A to 22D) and the fixing portion (23, 23A to 23D) is reference k/m,
k and m of the reference k/m are set such that k is within a range of kₘᵢₙ ≤ k ≤ kₘₐₓ when a value of tan δ as a loss factor of the fixing portion (23, 23A to 23D) is x, a minimum value kₘᵢₙ of k is kₘᵢₙ = 5.184 x 10⁹(1/x)²(1/m)³, a maximum value kₘₐₓ of k is kₘₐₓ = 482.2531 x²m⁵, and kmin < kmax,
when, of k/m of all the sets of the cell (22, 22A to 22D) and the fixing portion (23, 23A to 23D), k/m that is greater than the reference k/m and is the greatest k/m is maximum k/m,
of k/m of all the sets of the cell (22, 22A to 22D) and the fixing portion (23, 23A to 23D), k/m that is less than the reference k/m and is the least k/m is minimum k/m, and
dispersion of (the reference k/m)/(the reference k/m), (the maximum k/m)/(the reference k/m), and (the minimum k/m)/(the reference k/m) is D,
the dispersion D satisfies 0.2 < D < 550.

2. The battery mounting structure according to claim 1, further comprising
a pair of left and right front wheels (3) rotatably attached to both left and right sides of a front portion of the vehicle body (1).

3. The battery mounting structure according to claim 1 or 2, wherein
in the case where the value of tan δ is x = 2, where the minimum value kₘᵢₙ of k is kₘᵢₙ = 1.296 x 10⁹(1/m)³, where the maximum value kₘₐₓ of k is kₘₐₓ = 1.929 x 10³m⁵, and where kₘᵢₙ < kₘₐₓ, k is within a range of kₘᵢₙ ≤ k ≤ kₘₐₓ.

4. The battery mounting structure according to any one of the preceding claims, wherein
k/m of a half of the sets of the cell (22, 22A to 22D) and the fixing portion (23, 23A to 23D) among the total number of the sets of the cell (22, 22A to 22D) and the fixing portion (23, 23A to 23D) is the reference k/m.

5. The battery mounting structure according to any one of the preceding claims, wherein
the battery module (10) further includes a partition portion (24) disposed between the adjacent cells (22, 22A to 22D) and supported by the battery casing (21), and
in a state of being sandwiched between the cell (22, 22A to 22D) and the partition portion (24), the fixing portion (23, 23A to 23D) is configured to fix the cell (22, 22A to 22D).

6. The battery mounting structure according to any one of the preceding claims, wherein
the battery module (10) includes four cells (22, 22A to 22D) disposed in series in the predetermined direction and four fixing portions (22, 22A to 22D) individually fixing the four cells (22, 22A to 22D) to the battery casing (21),
a first k/m and a second k/m of two sets of the cell (22, 22A to 22D) and the fixing portion (23, 23A to 23D) are a first reference k/m and a second reference k/m,
k of the first reference k/m is within the range of kₘᵢₙ ≤ k ≤ kₘₐₓ when the value of tan δ as the loss factor of the fixing portion (23, 23A to 23D) is x, the minimum value kₘᵢₙ of k is kₘᵢₙ = 5.184 x 10⁹(1/x)²(1/m)³, the maximum value kₘₐₓ of k is kₘₐₓ = 482.2531 x²m⁵, and kmin < kmax,
k of the second reference k/m is within the range of kₘᵢₙ ≤ k ≤ kₘₐₓ when the value of tan δ as the loss factor of the fixing portion (23, 23A to 23D) is x, the minimum value kₘᵢₙ of k is kₘᵢₙ = 5.184 x 10⁹(1/x)²(1/m)³, the maximum value kₘₐₓ of k is kₘₐₓ = 482.2531 x²m⁵, and kmin < kmax, and
dispersion of (the first reference k/m)/(the second reference k/m), (the maximum k/m)/(the second reference k/m), and (the minimum k/m)/(second reference k/m) satisfies 0.2 < D < 550.

7. The battery mounting structure according to any one of the preceding claims, wherein the at least two sets of the cell (22, 22A to 22D) and the fixing portion (23, 23A to 23D) are configured to reduce a vibration in a range of 100 to 400 Hz or a range of about 100 to about 400 Hz.

8. The battery mounting structure according to any one of the preceding claims, wherein
the at least two sets of the cell (22, 22A to 22D) and the fixing portion (23, 23A to 23D) are configured to reduce a vibration at a predetermined frequency.

9. The battery mounting structure according to claim 8, wherein
the predetermined frequency is 126 [Hz] or about 126 [Hz].

10. The battery mounting structure according to claim 8 or 9, wherein
a set of the cell (22, 22A to 22D) and the fixing portion (23, 23A to 23D) is configured to reduce a vibration above the predetermined frequency.

11. The battery mounting structure according to any one of claims 8 to 10, wherein
a set of the cell (22, 22A to 22D) and the fixing portion (23, 23A to 23D) is configured to reduce a vibration below the predetermined frequency.

12. The battery mounting structure according to any one of the preceding claims, wherein
the predetermined direction is a vehicle front-rear direction.

13. A vehicle comprising the battery mounting structure according to any one of the preceding claims.

14. A battery mounting method for a vehicle comprising fixing at least one battery module (10) to a vehicle body (1), wherein
the battery module (10) includes:
a battery casing (21);
four or more of a plurality of cells (22, 22A to 22D) accommodated in the battery casing (21) and disposed in series in a predetermined direction; and
four or more of a plurality of fixing portions (23, 23A to 23D) disposed in the battery casing (21) and individually fixing the plurality of cells (22, 22A to 22D) to the battery casing (21),
when rigidity of the fixing portion (23, 23A to 23D) is k [N/m] and mass of the cell (22, 22A to 22D) is m [kg],
of all sets of the cell (22, 22A to 22D) and the fixing portion (23, 23A to 23D), k/m of at least two sets of the cell (22, 22A to 22D) and the fixing portion (23, 23A to 23D) is reference k/m,
k and m of the reference k/m are set such that k is set within a range of kₘᵢₙ ≤ k ≤ kₘₐₓ when a value of tan δ as a loss factor of the fixing portion (23, 23A to 23D) is x, a minimum value kₘᵢₙ of k is kₘᵢₙ = 5.184 x 10⁹(1/x)²(1/m)³, a maximum value kₘₐₓ of k is kₘₐₓ = 482.2531 x²m⁵, and kmin < kmax,
when, of k/m of all the sets of the cell (22, 22A to 22D) and the fixing portion (23, 23A to 23D), k/m that is greater than the reference k/m and is the greatest k/m is maximum k/m,
of k/m of all the sets of the cell (22, 22A to 22D) and the fixing portion (23, 23A to 23D), k/m that is less than the reference k/m and is the least k/m is minimum k/m, and
dispersion of (the reference k/m)/(the reference k/m), (the maximum k/m)/(the reference k/m), and (the minimum k/m)/(the reference k/m) is set as D,
the dispersion D is set to satisfy 0.2 < D < 550.

15. The battery mounting method according to claim 14, wherein
the battery module (10) includes four cells (22, 22A to 22D) disposed in series in the predetermined direction and four fixing portions (22, 22A to 22D) individually fixing the four cells (22, 22A to 22D) to the battery casing (21),
a first k/m and a second k/m of two sets of the cell (22, 22A to 22D) and the fixing portion (23, 23A to 23D) are a first reference k/m and a second reference k/m,
k of the first reference k/m is set within the range of kₘᵢₙ ≤ k ≤ kₘₐₓ when the value of tan δ as the loss factor of the fixing portion (23, 23A to 23D) is x, the minimum value kₘᵢₙ of k is kₘᵢₙ = 5.184 x 10⁹(1/x)²(1/m)³, the maximum value kₘₐₓ of k is kₘₐₓ = 482.2531 x²m⁵, and kmin < kmax,
k of the second reference k/m is set within the range of kₘᵢₙ ≤ k ≤ kₘₐₓ when the value of tan δ as the loss factor of the fixing portion (23, 23A to 23D) is x, the minimum value kₘᵢₙ of k is kₘᵢₙ = 5.184 x 10⁹(1/x)²(1/m)³, the maximum value kₘₐₓ of k is kₘₐₓ = 482.2531 x²m⁵, and kmin < kmax, and
dispersion D of (the first reference k/m)/(the second reference k/m), (the maximum k/m)/(the second reference k/m), and (the minimum k/m)/(second reference k/m) is set to satisfy 0.2 < D < 550.
